(19) Europäisches Patentamt / European Patent Office / Office européen des brevets

(11) **EP 4 292 983 A1**

(12) **EUROPEAN PATENT APPLICATION**
published in accordance with Art. 153(4) EPC

(43) Date of publication:
**20.12.2023   Bulletin 2023/51**

(21) Application number: **22752800.7**

(22) Date of filing: **10.02.2022**

(51) International Patent Classification (IPC):
**C01B 33/18** (2006.01)      **B01J 20/10** (2006.01)
**B01J 20/32** (2006.01)

(52) Cooperative Patent Classification (CPC):
**B01J 20/10; B01J 20/32; C01B 33/18**

(86) International application number:
**PCT/JP2022/005268**

(87) International publication number:
**WO 2022/172978 (18.08.2022 Gazette 2022/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.02.2021   JP 2021020881**

(71) Applicants:
• **Tohoku University**
  **Sendai-shi, Miyagi 980-8577 (JP)**
• **Daicel Corporation**
  **Osaka 530-0011 (JP)**

(72) Inventors:
• **NAGAO, Daisuke**
  **Sendai-shi, Miyagi 980-8577 (JP)**
• **SUGA, Keishi**
  **Sendai-shi, Miyagi 980-8577 (JP)**
• **YOSHIZAWA, Chinatsu**
  **Sendai-shi, Miyagi 980-8577 (JP)**
• **DEN, Hiroakira**
  **Tokyo 108-8230 (JP)**

(74) Representative: **Grünecker Patent- und Rechtsanwälte**
**PartG mbB**
**Leopoldstraße 4**
**80802 München (DE)**

(54) **METHOD FOR PRODUCING CORE-SHELL POROUS SILICA PARTICLES, AND CORE-SHELL POROUS SILICA PARTICLES**

(57)     A method for producing core-shell porous silica particles including: a step of forming a shell precursor by continuously adding a silica source-containing liquid into an aqueous suspension containing non-porous silica particles, a cationic surfactant, a basic catalyst, and an alcohol under conditions that a pH of the reaction system is from 7 to 13 and a pH value change of the reaction system is 1.5/10 min to form a shell precursor on a surface of non-porous silica particles; and a step of forming a porous shell by removing the cationic surfactant from the shell precursor, to form a porous shell; wherein in the step of forming the shell precursor, when a specific surface area of the non-porous silica particles is $Xm^2/g$, a used amount of the non-porous silica particles is $Yg$, and a used amount of the silica source is $Zcm^3$, $Z/(XY)$ being from 0.01 to 10.

FIG. 5

EP 4 292 983 A1

**Description**

Technical Field

The present disclosure relates to a method for producing core-shell porous silica particles and a method for producing core-shell porous silica particles.

Background Art

Porous materials such as porous silica are widely used as separating agents, adsorbents, and catalyst supports due to their large specific surface areas. It is expected that forming such porous materials into particles can expand the range of their use. In particular, micron-sized porous silica particles have been used for separation analysis of chemical substances as column fillers for liquid chromatography such as high-performance liquid chromatography (HPLC).

Core-shell mesoporous silica particles (C-MSPs), in which a surface of a monodisperse core particle is covered with a mesoporous silica shell having a pore size of 2 to 50 nm, attract attention as column fillers for liquid chromatography. Such core-shell particles are advantageous from the perspective of achieving excellent monodispersibility and mechanical strength compared to those of completely porous particles having no cores.

It is known that separation performance of column fillers depends on the particle size, shell thickness, pore size, and the like. In particular, when a thickness of a shell, which serves as a separation field, increases, a retention time of a separation analysis target tends to be longer. Therefore, an increase in the thickness of a shell is important in improvement of separation performance of column fillers, and various methods for increasing a thickness of a shell have been developed.

For example, Patent Documents 1 and 2 each describe a multi-stage process, in which shell formation (coating) is performed for multiple times until a desired shell thickness is obtained.

Furthermore, Patent Document 3 describes a method for producing core-shell porous silica particles, the method including subj ecting tetraethoxysilane to hydrolysis/condensation in the presence of an electrolyte such as LiBr and a cationic surfactant such as cetyltrimethylammonium bromide, to form a shell precursor, and then removing the cationic surfactant, to produce core-shell porous silica particles having a shell thickness of approximately 100 nm.

Citation list

Patent Documents

Patent Document 1: US 3505785
Patent Document 2: US 2007/0189944 A
Patent Document 3: WO 2019/240294

Summary of Invention

Technical Problem

However, the multi-stage processes of Patent Documents 1 and 2 include complicated processes and also scaling up is difficult, and thus these processes are not suitable for industrial applications.

The production method described in Patent Document 3 is a simple process; however, there is room for further increase in the thickness of a shell. However, to increase the thickness of a shell, an amount of shell raw material used needs to be increased according to the shell thickness; this causes aggregation of core particles and formation of silica secondary particles as byproducts. Thus, a large portion of the shell raw material is not consumed for formation of the shell, and as a result, the thickness of the shell is not adequately increased, which is problematic.

An object of the present disclosure is to provide a method for producing core-shell porous silica particles, the shell having an increased thickness.

Another object of the present disclosure is to provide core-shell porous silica particles, the shell having an increased thickness.

Solution to Problem

To solve the problems described above, the present inventors conducted diligent research. As a result, it was found that the problems described above can be solved by continuously adding a silica source into a suspension containing core particles in a manner that a pH of the reaction system is in a particular range and a pH value change is less than a particular degree during formation of the shell. That is, an overview of the present disclosure is as described below.

[1] A method for producing core-shell porous silica particles, the method comprising:

a step of forming a shell precursor, the step comprising continuous addition of a liquid containing a silica source into an aqueous suspension containing non-porous silica particles, a cationic surfactant, a basic catalyst, and an alcohol to form a shell precursor on a surface of non-porous silica particles, the continuous addition satisfying conditions (A) and (B),

(A) a pH of a reaction system at a reaction temperature is 7 or higher and 13 or lower, the reaction system being a system in which the liquid containing the silica source has been added to the aqueous suspension, and
(B) a pH value change of the reaction system at the reaction temperature is 1.5/10 min or less; and

a step of forming a porous shell, the step comprising removal of the cationic surfactant from the shell precursor that has been formed in the step of forming the shell precursor, to form a porous shell;
wherein, when a specific surface area of the non-porous silica particles is X $m^2/g$, a used amount of the non-porous silica particles is Y g, and a used amount of the silica source is Z $cm^3$ in the step of forming the shell precursor, Z/(XY) is 0.01 or greater and 10.0 or less.

[2] The method for producing core-shell porous silica particles according to [1], wherein a volume average particle size of the non-porous silica particles is 1.0 $\mu$m or greater and 2.4 $\mu$m or less.
[3] The method for producing core-shell porous silica particles according to [1] or [2], wherein the cationic surfactant is an alkylammonium halide.
[4] The method for producing core-shell porous silica particles according to any one of [1] to [3], wherein the basic catalyst is ammonia.
[5] The method for producing core-shell porous silica particles according to any one of [1] to [4], wherein the alcohol is an alkyl alcohol.
[6] The method for producing core-shell porous silica particles according to any one of [1] to [5], wherein the silica source is an alkoxysilane.
[7] Core-shell porous silica particles including:

core particles and shells each covering at least a part of each of the core particles, wherein
the core particles are non-porous silica particles having a volume average particle size of 1.0 $\mu$m or greater and 2.4 $\mu$m or less,
the shells are porous silica layers having a peak pore size of 1.0 nm or greater and 6.0 nm or less and having a thickness of 50 nm or greater and 500 nm or less, and
the core-shell porous silica particles have a volume average particle size of 1.1 $\mu$m or greater and 2.5 $\mu$m or less.

[8] The core-shell porous silica particle according to [7], wherein a BET specific surface area of the core-shell porous silica particles is 150 $m^2/g$ or greater and 1000 $m^2/g$ or less.

Advantageous Effects of Invention

According to the present disclosure, a method for producing core-shell porous silica particles with an increased thickness of the shell can be provided. Furthermore, according to a preferred aspect of the present disclosure, formation of silica secondary particles as byproducts can be suppressed in the production method.
Furthermore, according to the present disclosure, a core-shell porous silica particle with an increased thickness of the shell can be provided.
The problems and effects of the present disclosure are not limited to those specifically described above and also include those obvious to a person skilled in the art based on the entire specification.

BriefDescripticn of Drawing

FIG. 1 is a graph showing a pH change of a reaction system over time in a shell precursor formation of each of Examples 1 to 6 and Comparative Examples 1 to 3.
FIG. 2 is a graph showing a nitrogen adsorption/desorption isotherm of core-shell porous silica particles obtained in Examples 4 to 6.
FIG. 3 is a graph showing a pore size distribution of core-shell porous silica particles obtained in Examples 4 to 6.
FIG. 4 is a TEM image showing change over time of particles formed in a shell precursor formation of Example 1 (photograph in lieu of drawing).
FIG. 5 is a TEM image showing particles produced in Examples 1 to 6 and Comparative Examples 1 to 3 (photograph in lieu of drawing).

Description of Embodiments

The present disclosure is described in detail below through specific embodiments. However, each of the configurations in each embodiment, combinations thereof, and the like are examples, and various additions, omissions, substitutions, and other changes may be made as appropriate within a scope that does not depart from the spirit of the present disclosure. The present disclosure is not to be considered limited to embodiments.
Also, each aspect disclosed in the present specification can be combined with any other feature disclosed herein.
Note that, in the present specification, when a lower limit value and an upper limit value for a numerical range are separately indicated, the numerical range can be a combination of a freely chosen lower limit value and a freely chosen upper limit value among these.

1. Method for Producing Core-Shell Porous Silica

A method for producing core-shell porous silica particles according to an embodiment of the present disclosure is a production method based on a micelle-template method, in which a micelle that is a self-organized structure of a cationic surfactant is used as a template for a pore. Specifically, the production method is a production method including: shell precursor formation of forming a shell precursor on a surface of each of core particles, the shell precursor being an accumulation formed by electrostatic interaction of micelles of a cationic surfactant and anionic formation silica seeds; and shell formation of removing the micelles from the formed shell precursor.
More specifically, the method for producing core-shell porous silica particles according to the present embodiment includes shell precursor formation of continuously adding a liquid containing a silica source (hereinafter, also referred to as "silica source-containing liquid") into an aqueous suspension containing non-porous silica particles, a cationic surfactant, a basic catalyst, and an alcohol to form a shell precursor on a surface of each of non-porous silica particles, and shell formation of removing the cationic surfactant from the shell precursor that has been formed in the shell precursor formation to form a porous shell. The continuous addition of the silica source-containing liquid into the aqueous suspension is performed in a manner that a pH of the reaction system is maintained in a range of 7 or higher and 13 or lower and a pH value change of the reaction system is 1.5/10 min or less. In the present specification, the reaction system is a system in which a shell precursor formation reaction occurs and a system in which a silica source-containing liquid is added into an aqueous suspension to form the shell precursor. When a specific surface area of the non-porous silica particles is $X$ m$^2$/g, a used amount of the non-porous silica particles is $Y$ g, and a used amount of the silica source is $Z$ cm$^3$, the amount of the silica source used in the shell precursor formation is an amount determined according to a condition that $Z/(XY)$ be 0.01 or greater and 10.0 or less.
In the present specification, continuously adding a silica source-containing liquid gradually into an aqueous suspension containing core particles under the conditions described above may be referred to as "continuous addition" or simply "addition". Meanwhile, a form of addition known in the art, that is, adding a silica source-containing liquid into an aqueous suspension containing core particles in a short time period, such as approximately 30 seconds, 1 minute, or 5 minutes, is referred to as "batch addition" for distinction.
According to the method for producing core-shell porous silica particles of the present embodiment, a core-shell porous silica particle having a thick shell can be provided. The inventors of the present invention surmise the reason why the shell thickness can be increase by this production method as follows.
As the silicic acid ion concentration increases in the reaction system as hydrolysis of the silica source progresses, ionic strength in the reaction system increases. This increase in the ionic strength weakens electrostatic repulsion between the core particles and formed free silica seeds (hereinafter, also referred to as "silica nuclei") and promotes aggregation growth of the silica nuclei and deposition of the core particles on a surface. At this time, if the pH of the reaction system is excessively high, due to high solubility of the silica, deposition of the silica on the core particle surface is less likely to occur. Therefore, the shell precursor is also less likely to be formed. On the other hand, if the pH of the reaction system is excessively low, due to low solubility of the silica, deposition of the silica on the core particle surface tends to occur; however, a condensation reaction of the hydrolyzed silica source is less likely to proceed, and as a result, the shell precursor is less likely to be formed. It is thus conceived that, when the pH of the reaction system is maintained in an appropriate range, the hydrolysis/condensation reaction of the silica source proceeds rapidly and aggregation growth of the formed silica nuclei and the deposition on the core particle surface also proceed rapidly, a thick shell precursor can be formed efficiently, and thus a thick shell can be formed.

Furthermore, when the silica source-containing liquid is subjected to batch addition, the pH of the reaction system rapidly decreases, and particles dispersed in the reaction system become unstable. As a result, aggregation of core particles and deposition of silica secondary particles unfavorably occur. On the other hand, when the silica source-containing liquid is continuously added to the aqueous suspension, the pH of the reaction system gradually decreases, and it is thus conceived that aggregation of core particles and formation of silica secondary particles as byproducts can be suppressed.

From the above, it is presumed that, in the shell precursor formation, the thickness of the shell can be increased by controlling the addition of the silica source-containing liquid to maintain the pH of the reaction system in an appropriate range and to avoid an excessive increase in the pH value change of the reaction system. Furthermore, it is surmised that, within the silica source, a proportion of silica source consumed for the shell precursor formation increases, and formation of secondary particles as byproducts is also suppressed, and thus efficient increase of the thickness of the shell can be achieved.

Although the increase of the thickness of the shell can be also achieved by a multi-stage process, which is a known production method, the obtained core-shell particles tend to have less porosity due to mismatched surfaces between silica layers formed in the stages, and separation performance tends to decrease when such core-shell particles are used as column fillers for liquid chromatography. On the other hand, according to the production method of the present embodiment, core-shell porous silica particles having a large shell thickness can be produced without repeating formation of the shell as in a multi-stage process. Thus, a core-shell porous silica particle having a shell including no mismatched surface but having a large thickness can be produced. Therefore, the core-shell porous silica particles obtained according to the production method of the present embodiment are expected to exhibit high separation performance when the core-shell porous silica particles are used as column fillers for liquid chromatography.

1-1. Shell Precursor Formation

The shell precursor formation is a step of forming a shell precursor on a surface of each of non-porous silica particles. In the shell precursor formation, a shell precursor is formed on a surface of each of non-porous silica particles by continuously adding a silica source-containing liquid into an aqueous suspension containing the non-porous silica particles, a cationic surfactant, a basic catalyst, and an alcohol in a manner that the following conditions (A) and (B) are satisfied. When a specific surface area of the non-porous silica particles in the aqueous suspension is $X$ m$^2$/g, a used amount of the non-porous silica particles is $Y$ g, and a used amount of the silica source is $Z$ cm$^3$, $Z/(XY)$ is 0.01 or greater and 10.0 or less. Alternatively, the amount of the silica source in the silica source-containing liquid may be 60 parts by weight or greater and 350 parts by weight or less with respect to 100 parts by weight of the non-porous silica particles in the aqueous suspension.

(A) A pH of the reaction system at a reaction temperature is 7 or higher and 13 or lower.
(B) A pH value change of the reaction system at the reaction temperature is 1.5/10 min or less.

Hereinafter, the aqueous suspension, the silica source-containing liquid, the reaction conditions, the operating procedure, and the like in the shell precursor formation will be described.

1-1-1. Aqueous Suspension

The aqueous suspension contains at least non-porous silica particles, a cationic surfactant, a basic catalyst, and an alcohol. The non-porous silica particles are preferably dispersed in an aqueous suspension. A preparation method of the aqueous suspension is not particularly limited, and the preparation is typically performed by mixing the components in no particular order. The aqueous suspension in which the non-porous silica particles are dispersed can be prepared by dispersing non-porous silica particles by subjecting a liquid mixture containing the non-porous silica particles, a cationic surfactant, and an alcohol to an ultrasonic treatment and then mixing the obtained dispersion liquid and a basic catalyst, for example, as described in Examples below.

(Non-porous Silica Particle)

The non-porous silica particle is used as a core particle of a core-shell porous silica particle, and is substantially non-porous.

"Substantially non-porous" means that the core particle has a specific surface area ($S_m$) of 50 m²/g or less. When the specific surface area ($S_m$) of the core particles is 50 m²/g or less, in a case where the core-shell porous silica particles are used as fillers for liquid chromatography, separation target materials adsorbed by the shells are not adsorbed by the core particles, and thus separation efficiency is good. The specific surface area ($S_m$) of the core particles is preferably 30 m²/g or less, more preferably 20 m²/g or less, and even more preferably 15 m²/g or less, and typically 0.5 m²/g or higher.

Note that, in the present specification, the specific surface area ($S_m$) of the core particles refers to a specific surface area calculated based on the following Equation (1). In Equation (1), $\rho$ refers to a density of the non-porous silica particles measured by a pycnometer method, and $D_v$ indicates a volume average particle size of the non-porous silica particles.

$$S_m = 6/(\rho D_v) \ (1)$$

From the perspective of ensuring a reaction site at which the shell precursor grows, the volume average particle size ($D_v$) of the non-porous silica particles is typically 1.0 μm or greater, preferably 1.1 μm or greater, and more preferably 1.3 μm or greater. On the other hand, from the perspective of achieving high separation performance, especially high separation performance under a high flow rate, in a case where the core-shell porous silica particles are used as column fillers for liquid column chromatography, the volume average particle size ($D_v$) of the non-porous silica particles is typically 2.4 μm or less, preferably 2.2 μm or less, and more preferably 2.0 μm or less.

Note that the volume average particle size ($D_v$) of the non-porous silica particles was determined by randomly selecting approximately 100 particles from a particle image captured by a scanning transmission electron microscope (STEM), measuring the particle sizes thereof, and performing calculation using the following Equation (2). In Equation (2), $d_i$ represents a particle size, and $n_i$ represents the number of particles.

$$d_v = \left( \sum_i n_i \, d_i^3 \Big/ \sum_i n_i \right)^{1/3} \quad (2)$$

A shape of the non-porous silica particle is preferably spherical. In the present specification, "spherical" does not only mean a true sphere shape and also includes shapes having circular, substantially circular, elliptical, or substantially elliptical cross-sectional shapes, such as a prolate spheroid and an oblate spheroid. Furthermore, the spherical particle is preferably a particle having a shape including no rod-like protrusion on a particle surface.

In the shell precursor formation, when a volume fraction of the non-porous silica particles with respect to a reaction total volume is greater than a particular value, the proportion of the silica source consumed for formation of the shell can be increased, and thus formation of silica secondary particles as byproducts can be suppressed. That is, when the volume fraction of the non-porous core particles with respect to the reaction total volume is excessively small, silica secondary particles may be formed as byproducts, and thus the content of the non-porous silica particles in the aqueous suspension is an amount that makes a volume fraction of the non-porous silica particles typically 0.001 vol.% or greater, preferably 0.010 vol.% or greater, more preferably 0.100 vol.% or greater, and even more preferably 1.00 vol.% or greater, with respect to the reaction total volume. On the other hand, for the volume fraction of the non-porous core particles with respect to the reaction total volume, from the perspective of reducing collision frequency of the non-porous silica particles in the solution, the content of the non-porous silica particles in the aqueous suspension is an amount that makes the volume fraction of the non-porous silica particles typically 50 vol.% or less, preferably 20 vol.% or less, more preferably 10 vol.% or less, and even more preferably 5.00 vol.% or less, with respect to the reaction total volume.

Note that, in the present specification, the reaction total volume refers to a volume of a reaction system to which the entire amount of the silica source-containing liquid is added to the aqueous suspension.

As the non-porous silica particles, a commercially available product may be used, or non-porous silica particles produced in accordance with a known method may be used. An example of such a known method includes the production method described in "Preparation Example 1 of core particles (non-porous silica particles)" in the examples of WO 2017/141821. In this production method of the example, a small sealed glass reactor with an internal volume of 110 mL was used, and stirring was performed using a magnetic stirrer to make the reaction solution be uniform.

(Cationic Surfactant)

The cationic surfactant forms a micelle by self-organization, and the micelle functions as a template for forming pores in the shell. The type and concentration of the cationic surfactant greatly affect the shape of the pores of the shell. One type of the cationic surfactant may be used alone, or a freely chosen combination and ratio of two or more types of the cationic surfactants may be used. However, to form a shell having uniform pores, one type of the cationic surfactant is preferably used alone.

The type of the cationic surfactant is not particularly limited, and preferred examples include alkylammonium halides and alkylamines.

Examples of alkylammonium halides include tetradecyltrimethylammonium halides, hexadecyltrimethylammonium halides, octadecyltrimethylammonium halides, eicosyltrimethylammonium halides, and docosyltrimethylammonium halides. Of these, from the perspective of the size of the pores to be formed, hexadecyltrimethylammonium halides and octadecyltrimethylammonium halides are preferred, and hexadecyltrimethylammonium bromide (cetyltrimethylammonium bromide; CTAB) and octadecyltrimethylammonium bromide (stearyltrimethylammonium bromide; STAB) are more preferred.

Examples of the alkylamines include linear alkylamines having from 8 to 20 carbons, and dodecylamine is particularly preferable from the perspective of easily forming uniform pores.

A concentration of the cationic surfactant in the aqueous suspension is a concentration that makes a concentration of the cationic surfactant with respect to the reaction total volume typically 0.1 mM or greater, preferably 1 mM or greater, and more preferably 5 mM or greater, from the perspective of adequately exhibiting the effect as a template. On the other hand, the concentration of the cationic surfactant in the aqueous suspension is a concentration that makes a concentration of the cationic surfactant with respect to the reaction total volume typically 1000 mM or less, preferably 500 mM or less, and more preferably 100 mM or less, from the perspective of forming uniform pores.

(Basic Catalyst)

The basic catalyst is not particularly limited, and can be appropriately selected from organic basic substances and inorganic basic substances, which can promote reaction converting a silica source into silica, and used. One type of the basic catalyst may be used alone, or a freely chosen combination and ratio of two or more types of the basic catalysts may be used.

As the basic catalyst, an ammonium-based or amine-based basic catalyst, which is a nitrogen-based basic catalyst, is preferable, and highly reactive ammonia is more preferable. Furthermore, in cases where ammonia is used, the use of ammonia solution is preferable from the perspective of safety.

A concentration of the basic catalyst in the aqueous suspension is a concentration that makes the concentration of the basic catalyst with respect to the reaction total volume typically 0.01 mM or greater, preferably 0.05 mM or greater, more preferably 0.1 mM or greater, even more preferably 1 mM or greater, and particularly preferably 10 mM or greater, from the perspective of promoting the reaction. On the other hand, the concentration of the basic catalyst in the aqueous suspension is a concentration that makes the concentration of the basic catalyst with respect to the reaction total volume typically 10.0 M or less, preferably 5.0 M or less, more preferably 3.0 M or less, even more preferably 500 mM or less, and particularly preferably 200 mM or less, from the perspective of controlling the reaction.

(Alcohol)

The alcohol is not particularly limited and can be appropriately selected from alcohols having the freely chosen number of carbons and hydroxy groups, and is preferably an alkyl alcohol. The alkyl group of the alkyl alcohol may be a straight-chained, branched, or cyclic alkyl group, and preferably a straight-chained or branched alkyl group, and more preferably a straight-chain alkyl group. The number of carbons of the alkyl group is typically 1 or greater, and preferably 2 or greater, and typically 12 or less, preferably 8 or less, and more preferably 6 or less. One type of the alcohol may be used alone, or a freely chosen combination and ratio of two or more types of the alcohols may be used.

Specific examples of the alcohol include methanol, ethanol, isopropanol, n-propanol, butanol, ethylene glycol, and glycerin. Among these, from the perspective of solubility of the silica source, the alcohol is preferably methanol or ethanol, and more preferably ethanol.

A concentration of the alcohol in the aqueous suspension is a concentration that makes the concentration of the alcohol with respect to the reaction total volume typically 0.1 M or greater, preferably 0.5 M or greater, and more preferably 1 M or greater, and typically 18 M or less, preferably 17 M or less, and more preferably 15 M or less.

For example, in a case where tetraethoxysilane (TEOS) is used as the silica source to form the porous silica and ethanol is used as the alcohol, setting the alcohol concentration with respect to the reaction total volume to 0.1 M or greater can control hydrolysis of the tetraethoxysilane to an appropriate rate, and thus the shell precursor can be formed uniformly on the surface of the core particle. Furthermore, setting the alcohol concentration with respect to the reaction total volume to 18 M or less can allow the silica source to be consumed for the shell precursor formation with high efficiency.

(Hydrophobic Part-Containing Additive)

The aqueous suspension may contain a hydrophobic part-containing additive. The hydrophobic part-containing additive is an additive having a hydrophobic part that increases the volume of a micelle formed by the cationic surfactant. When the hydrophobic part-containing additive is present in the reaction system, the hydrophobic part-containing additive dissolves in a hydrophobic environment formed by the cationic surfactant, and as a result of expansion of the hydrophobic field size, a porous shell having a large pore size can be formed.

The type of the hydrophobic part-containing additive is not particularly limited, and examples thereof include substances having a low solubility in water, such as benzene, toluene, cyclohexane (CyH), cyclohexanol, dodecanol, decane, chlorododecane, 1,3,5-trimethylbenzene (TMB), and 1,3,5-triisopropylbenzene. From the perspective of the degree of nonpolarity, among these, the hydrophobic part-containing additive is preferably cyclohexane (CyH), 1,3,5-trimethylbenzene (TMB), or 1,3,5-triisopropylbenzene, and more preferably cyclohexane (CyH) or 1,3,5-trimethylbenzene (TMB). One type of the hydrophobic part-containing additive may be used alone, or a freely chosen combination and ratio of two or more types of the hydrophobic part-containing additives may be used.

In a case where the aqueous suspension contains the hydrophobic part-containing additive, a concentration of the hydrophobic part-containing additive in the aqueous suspension is a concentration that makes the concentration of the hydrophobic part-containing additive with respect to the reaction total volume typically 1 mM or greater, preferably 5 mM or greater, and more preferably 10 mM or greater, from the perspective of exhibiting effect of pore size expansion. On the other hand, the concentration of the hydrophobic part-containing additive in the aqueous suspension is a concentration that makes the concentration of the hydrophobic part-containing additive with respect to the reaction total volume typically 1000 mM or less, preferably 750 mM or less, and more preferably 500 mM or less, from the perspective of maintaining the micelle structure formed by the cationic surfactant.

In a case where the aqueous suspension contains the hydrophobic part-containing additive, a weight ratio of the hydrophobic part-containing additive to the cationic surfactant is typically 0.1 or greater and, in order of increasing preference, 0.5 or greater, 1.0 or greater, 3.0 or greater, 5.0 or greater, and 7.0 or greater, from the perspective of expansion of a space of hydrophobic environment formed by the cationic surfactant. On the other hand, from the perspective of avoiding disintegration of the shell in the shell formation, the weight ratio of the hydrophobic part-containing additive to the cationic surfactant is typically 15.0 or less, preferably 12.0 or less, and more preferably 10.0 or less.

Electrolyte

The aqueous suspension may contain an electrolyte. It is conceived that the electrolyte contributes to an increase in the thickness of the shell.

Examples of the electrolyte include a chlorine-based electrolyte, a bromine-based electrolyte, and an iodine-based electrolyte. Specific examples of the chlorine-based electrolyte include sodium chloride, potassium chloride, and lithium chloride. Examples of the bromine-based electrolyte include sodium bromide, potassium bromide, and lithium bromide. Examples of the iodine-based electrolyte include sodium iodide, potassium iodide, and lithium iodide. From the perspective of further increase in the shell thickness, the bromine-based electrolyte such as sodium bromide, potassium bromide, or lithium bromide is preferable as the electrolyte, and of these, lithium bromide is more preferable. One type of the electrolyte may be used alone, or a freely chosen combination and ratio of two or more types of the electrolytes may be used.

In a case where the aqueous suspension contains the electrolyte, a concentration of the electrolyte in the aqueous suspension is a concentration that makes the concentration of the electrolyte with respect to the reaction total volume preferably 1 mM or greater, more preferably 2 mM or greater, and even more preferably 3 mM or greater, from the perspective of further increasing the thickness of the shell. On the other hand, the concentration of the electrolyte in the aqueous suspension is a concentration that makes the concentration of the electrolyte with respect to the reaction total volume preferably 7.5 mM or less, more preferably 7 mM or less, even more preferably 6 mM or less, particularly preferably 5 mM or less, and most preferably 4 mM or less, from the perspective of suppressing formation of uncovered particles, non-spherical particles, aggregates, and the like.

1-1-2. Silica Source-Containing Liquid

The silica source-containing liquid is not particularly limited as long as the silica source-containing liquid contains the silica source. The silica source-containing liquid may consist only of the silica source or may be a silica source solution in which the silica source has been diluted with a solvent. A concentration of the silica source solution is not particularly limited and can be appropriately selected based on addition rate of the silica source solution, reactivity of the silica source, and the like. A preparation method of the silica source solution is not particularly limited, and the preparation is typically performed by mixing the components in no particular order.

(Silica Source)

The silica source is not particularly limited as long as the silica source can form a silicon oxide by a reaction. From the perspectives of reaction efficiency and handling, the silica source is preferably an alkoxysilane; silicate such as sodium silicate; or a mixture of these, and an alkoxysilane is preferable. From the perspective of versatility, of the alkoxysilanes, trimethylmethoxysilane, trimethylethoxysilane, tetraethoxysilane (tetraethylorthosilicate; TEOS), and tetramethoxysilane are more preferable, and tetraethoxysilane (tetraethylorthosilicate; TEOS) is particularly preferable. One type of the silica source may be used alone, or a freely chosen combination and ratio of two or more types of the silica sources may be used.

An amount of the silica source used in the shell precursor formation also depends on the type of the silica source, a volume average particle size ($D_v$) of the core particles, and the like. However, when a specific surface area of the non-porous silica particles is $X$ m²/g, a used amount of the non-porous silica particles is $Y$ g, and a used amount of the silica source is $Z$ cm³, the amount of the silica source used in the shell precursor formation is an amount that makes $Z/(XY)$ typically 0.010 or greater and, in order of increasing preference, 0.015 or greater, 0.18 or greater, 0.020 or greater, 0.40 or greater, and 0.80 or greater, and typically 10 or less, preferably 5.0 or less, more preferably 2.0 or less, and even more preferably 1.00 or less. Alternatively, the amount of the silica source used is typically 60 parts by weight or greater and may be preferably 100 parts by weight or greater, and more preferably 200 parts by weight or greater, and typically 350 parts by weight or less, and preferably 300 parts by weight or less, with respect to 100 parts by weight of the non-porous silica particles.

When the amount of the silica source is set to the ranges described above, the silica source in an amount necessary to form a thick shell can be supplied to the reaction system, and formation of silica secondary particles as byproducts can be suppressed.

Solvent

The solvent of the silica source solution is not particularly limited as long as the shell precursor can be formed on the surface of the non-porous silica particle. Suitable examples of the solvent include alcohols listed for the explanation of the alcohol contained in the aqueous suspension.

1-1-3. Reaction Condition and Operation

The shell precursor formation is performed by continuously adding the silica source-containing liquid into the aqueous suspension in a manner that the condition (A) related to the range of the pH value of the reaction system and the condition (B) related to the pH value change of the reaction system over time are satisfied. Thus, the shell precursor formation is preferably performed while the pH change of the reaction system is monitored by using a pH meter (e.g., LAQUA, available from Horiba, Ltd.) to check that the conditions (A) and (B) are satisfied.

The conditions (A) and (B) are implemented to control the pH of the reaction system in a range suitable for increasing the thickness of the shell by controlling a hydrolysis rate of the silica source during the reaction, and details thereof are described below.

Condition (A)

The condition (A) is to control the pH of the reaction system at the reaction temperature to a specific range.

The pH in the specific range is typically 7 or higher, preferably 8 or higher, more preferably 8.5 or higher, and even more preferably 9 or higher, and typically 13 or lower, preferably 12.5 or lower, and more preferably 12 or lower. Setting the pH to the range described above can rapidly promote diffusion of silica nuclei or aggregates thereof to a core particle surface while suppressing aggregation of core particles.

In the shell precursor formation, as the silica source-containing liquid is added to the aqueous suspension, the pH of the reaction system decreases. In the shell precursor formation, continuous addition of the silica source-containing liquid from the reaction start to the reaction completion is not necessary, and after the completion of the continuous addition, the reaction system may be stirred while the reaction temperature is maintained to continue the reaction. In a case where the reaction is continued even after completion of the continuous addition of the silica source-containing liquid, the condition is preferably satisfied after the continuous addition completion, that is, the condition (A) is preferably satisfied from the beginning of the continuous addition of the silica source-containing liquid to the completion of the reaction.

Condition (B)

The condition (B) is to control the pH value change of the reaction system at the reaction temperature to 1.5/10 min or less.

As described above, the pH of the reaction system decreases as the silica source-containing liquid is continuously added to the aqueous suspension. When the pH of the reaction system decreases rapidly beyond necessity, particles dispersed in the reaction system become unstable, and problems such as aggregation of core particles and deposition of silica secondary particles may occur. Thus, it is important to set the pH value change of the reaction system at the reaction temperature to not greater than a specific value to control the reaction in a manner that formation of silica secondary particles as byproducts is suppressed and the silica source is efficiently consumed for formation of the shell precursor.

Specifically, in the present embodiment, the pH value change of the reaction system at the reaction temperature is typically 1.5/10 min or less, preferably 1.3/10 min or less, more preferably 1.1/10 min or less, and even more preferably 1.0/10 min or less. Furthermore, a lower limit of the pH value change of the reaction system at the reaction temperature is not particularly limited but is typically greater than 0, preferably 0.001/10 min or greater, more preferably 0.010/10 min or greater, and even more preferably 0.100/10 min or greater. This is because when the pH value change of the reaction system is not lower than the lower limit described above, it means a condition where an adequate amount of silicic acid ions is continuously formed in the reaction system due to the continuous addition of the silica source-containing liquid.

The pH value change of the reaction system at the reaction temperature is determined based on the pH measurement results of the reaction system during the continuous addition of the silica source-containing liquid and Equation (I) below. In a case where the pH is not measured periodically every 10 minutes, for example, the pH is measured every 3 minutes or 4 minutes. In a case where the pH value change in 10 minutes cannot be directly calculated based on Equation (I), the pH value change in 10 minutes is calculated based on Equation (II) below. In Equation (II), T represents a positive number except 10. However, from the perspective of determining the pH value change more accurately, T is preferably 8 or greater, and more preferably 9 or greater, and preferably 12 or less, and more preferably 11 or less.

$$\text{(pH at a freely chosen time point)} - \text{(pH at the freely chosen time point} + 10 \text{ minutes)} \quad \text{(I)}$$

$$\{\text{(pH at a freely chosen time point)} - \text{(pH at the freely chosen time point} + T \text{ minutes)}\} \times 10/T \quad \text{(II)}$$

Note that, in relation to characteristics of reaction conditions, limitation of measurement, and the like during the continuous addition of the silica source-containing liquid, even when the silica source-containing liquid is added to the aqueous suspension in a manner that the pH does not rapidly drop, there might be a moment when the pH value change in 10 minutes exceeds the upper limit value described above when the series of the pH value change from the beginning of the continuous addition is monitored. However, in the present specification, the continuous addition of the silica source-containing liquid satisfying the condition (B) does not intend to exclude such a case. For example, in a case where pH measurement is performed every few minutes while the silica source-containing liquid is continuously added to the aqueous suspension and the pH value changes in the 10 min were calculated by selecting 50 to 200 time points of freely selected 10 minutes, the condition (B) is considered to be satisfied if 85% or greater, preferably 90% or greater, more preferably 95% or greater, and even more preferably 99% or greater, of the pH value changes is in the range described above.

In a case where the reaction is continued even after the completion of the continuous addition of the silica source-containing liquid, the silica source in the reaction system is hydrolyzed even after the completion of the continuous addition of the silica source-containing liquid, and silicic acid ions are formed, and thus the pH of the reaction system decreases. However, because no new silica source is supplied to the system, the pH value change of the reaction system is smaller compared to the pH change during the continuous addition of the silica source-containing liquid, and the pH value of the reaction system converges to a constant value as shown in Examples described below. Thus, when the condition (B) is satisfied during the continuous addition of the silica source-containing liquid, typically, the condition (B) is also satisfied even after the completion of the continuous addition. Thus, in the shell precursor formation, the condition (B) is preferably satisfied from the beginning of the continuous addition of the silica source-containing liquid to the completion of the reaction.

Operation

A method of continuously adding the silica source-containing liquid into the aqueous suspension is not particularly limited as long as the conditions (A) and (B) are satisfied, but the silica source-containing liquid is preferably added to the aqueous suspension at a fixed or substantially fixed rate. Examples of such a method include a method of supplying the silica source-containing liquid into a reaction vessel containing the aqueous suspension by using a dropping funnel; a syringe; a pump such as a syringe pump or a peristaltic pump; or the like. Among these, from the perspective of capability of supplying the silica source-containing liquid stably at a fixed rate for a long period of time, a method using a peristaltic pump is preferred.

Addition Rate of Silica Source-Containing Liquid

As described above, the rate during the continuous addition of the silica source-containing liquid is not necessarily fixed; however, the silica source-containing liquid is preferably continuously added to the aqueous suspension at a fixed or substantially fixed rate. Specifically, the rate (flow rate) of the silica source-containing liquid is typically, 0.005 mL/min or greater, preferably 0.010 mL/min or greater, and more preferably 0.020 mL/min or greater, and typically 0.050 mL/min or less, preferably 0.040 mL/min or less, and more preferably 0.030 mL/min or less.

Reaction Temperature

From the perspective of the reaction rate, the temperature of the reaction system in the shell precursor formation is typically 5°C or higher, preferably 10°C or higher, and more preferably 15°C or higher. On the other hand, from the perspectives of reaction controllability and boiling point of the solvent, the temperature of the reaction system is typically 80°C or lower, preferably 70°C or lower, and more preferably 60°C or lower.

Reaction Time

From the perspective of uniformity of the shell precursor that is formed, a reaction time taken for the shell precursor formation is typically 3 hours or longer, preferably 5 hours or longer, more preferably 10 hours or longer, and even more preferably 15 hours or longer, from the beginning of the addition of the silica source-containing liquid to the aqueous suspension. Meanwhile, from the perspective of efficient shell precursor formation, the reaction time is typically 48 hours or less, preferably 36 hours or less, and more preferably 24 hours or less.

1-2. Shell Formation

The shell formation is a shell formation step in which the cationic surfactant is removed from the shell precursor that has been formed in the shell precursor formation, and a porous shell is formed. In a case where the aqueous suspension contains a hydrophobic part-containing additive, the hydrophobic part-containing additive is also removed from the shell precursor together with the cationic surfactant in the shell formation. A condition of removing the hydrophobic part-containing additive is the same condition as for the removal of the cationic surfactant.

Examples of the method to remove the cationic surfactant from the shell precursor that has been formed in the shell precursor formation include: a method including adding the shell precursor into a solvent in which the cationic surfactant is soluble and eluting the cationic surfactant into the solvent; and a method of firing the shell precursor that has been formed in the shell precursor formation to bum off the cationic surfactant in the shell precursor. Both of these methods are preferred methods, and it is more preferable to use the two methods in combination in order to completely remove the cationic surfactant.

With the latter firing method, a firing temperature is ordinarily at least 300°C, preferably at least 350°C, and more preferably at least 400°C, from the perspective of sufficient removal of the cationic surfactant. Meanwhile, from the perspective of maintaining the porous structure, the firing temperature is typically 1000°C or lower, preferably 900°C or lower, and more preferably 800°C or lower.

Furthermore, from the perspective of sufficient removal of the cationic surfactant, the firing time is ordinarily 30 minutes or longer, preferably 1 hour or longer, and more preferably 2 hours or longer. Meanwhile, from the perspective of efficient removal of the cationic surfactant, a firing time is typically 24 hours or less, preferably 12 hours or less, and more preferably 6 hours or less.

In the shell formation, for example, a washing step in which the shell precursor that has been formed in the shell precursor formation is washed, and a drying step in which the shell precursor is dried may be included. A preferred order of these steps is formation of the shell precursor, and then the washing step, the drying step, and removal of the cationic surfactant.

In the washing, washing can be carried out by, for example, precipitating the shell precursor through centrifugal separation, and replacing the solution. A solution used for washing is preferably water, and particularly deionized water (ultrapure water), and washing is generally carried out three times.

In the drying drying can be carried out by, for example, leaving the shell precursor to stand undisturbed overnight under a vacuum condition at room temperature after the reaction solution has been removed by centrifugation. Note that, in the present specification, "room temperature" refers to a temperature range of typically 15°C or higher and 40°C or lower, and preferably 20°C or higher and 35°C or lower.

2. Core-Shell Porous Silica Particle

The production method according to the present embodiment produces core-shell porous silica particles each containing a core particle and a shell that covers at least a part of the core particle, and preferably core-shell porous silica particles in which the entire surface of the core particle is covered by the shell.

The volume average particle size ($D_v$) of the core-shell porous silica particles is typically 1.1 $\mu$m or greater, preferably 1.2 $\mu$m or greater, more preferably 1.3 $\mu$m or greater, even more preferably 1.5 $\mu$m or greater, and particularly preferably 1.6 $\mu$m or greater, and typically 2.5 $\mu$m or less, preferably 2.2 $\mu$m or less, more preferably 2.0 $\mu$m or less, and even more preferably 1.9 $\mu$m or less, from the perspective of separation performance when the core-shell porous silica particles are used as column fillers for liquid chromatography.

The volume average particle size ($D_v$) of the core-shell porous silica particles was determined by randomly selecting approximately 100 particles from a particle image captured by a scanning transmission electron microscope (STEM), measuring the particle sizes thereof, and performing calculation using the following Equation (2). In Equation (2), $d_i$ represents a particle size, and $n_i$ represents the number of particles.

$$d_v = \left( \sum_i n_i d_i^3 \Big/ \sum_i n_i \right)^{1/3} \quad (2)$$

The volume average particle size ($D_v$) of the core particles of the core-shell porous silica particles is as described in the section of "1-1-1. Aqueous Suspension" above. The method of determining the volume average particle size ($D_v$) of the core particles from the core-shell porous silica particles is as follows. In a case where the shell thickness is approximately 300 nm or less, approximately 100 core-shell porous silica particles are randomly selected from a particle image captured by a scanning transmission electron microscope (STEM), the particle sizes of the core particle parts in the particle image are measured, and then calculation is performed using Equation (2) above. In a case where the shell thickness is approximately 300 nm or greater, because it becomes difficult to identify the boundary between the core particle and the shell, measurement is performed by utilizing the difference between the refractive index of the core particle and the refractive index of the shell as described below. That is, the core-shell porous silica particles are immersed in a medium having a refractive index that is approximately same as that of the shell. Approximately 100 core-shell porous silica particles are randomly selected from a particle image captured by an optical microscope, and the particle sizes of the core particle parts in the particle image are measured. Then calculation is performed using Equation (2) above.

From the perspective of high porosity, the shell thickness ($T_s$) of the core-shell porous silica particle is typically 50 nm or greater and, in order of increasing preference, 80 nm or greater, 90 nm or greater, 110 nm or greater, 120 nm or greater, 150 nm or greater, 180 nm or greater, 200 nm or greater, 220 nm or greater, and 240 nm or greater. Furthermore, from the perspective of mechanical strength of the particles, the shell thickness ($T_s$) of the core-shell porous silica particle is typically 500 nm or less, preferably 400 nm or less, more preferably 350 nm or less, and even more preferably 300 nm or less.

The shell thickness ($T_s$) may be determined by calculating the difference in the volume average particle size ($D_v$) between the obtained core-shell porous silica particle and the core particle.

From the perspective of a function as an adsorption layer when the core-shell porous silica particles are used as column fillers for liquid chromatography, a peak pore size ($D_p$) of the core-shell porous silica particles is typically 1.0 nm or greater, preferably 2.0 nm or greater, more preferably 2.1 nm or greater, even more preferably 2.2 nm or greater, particularly preferably 2.3 nm or greater, and most preferably 2.5 nm or greater, and typically 10.0 nm or less, preferably 6.0 nm or less, more preferably 5.0 nm or less, even more preferably 4.0 nm or less, particularly preferably 3.0 nm or less, and most preferably 2.8 nm or less. The peak pore size ($D_p$) may be determined by the nitrogen adsorption/desorption isotherm by BJH analysis.

From the perspective of ensuring adequate permeability of a separation target material, a pore volume ($V_p$) of the core-shell porous silica particle is typically 0.050 cm$^3$/g or greater, preferably 0.100 cm$^3$/g or greater, more preferably 0.130 or greater, even more preferably 0.140 cm$^3$/g or greater, yet even more preferably 0.200 cm$^3$/g or greater, particularly preferably 0.250 cm$^3$/g or greater, and most preferably 0.300 cm$^3$/g or greater. On the other hand, from the perspective of operability such as the elution time of the separation target material when the core-shell porous silica particles are used as column fillers for liquid chromatography, the pore volume ($V_p$) of the core-shell porous silica particle is typically 5.0 cm$^3$/g or less, preferably 3.0 cm$^3$/g or less, and more preferably 2.0 cm$^3$/g or less. The pore volume ($V_p$) may be determined by converting the amount of nitrogen adsorption when the ratio of the vapor pressure to the saturated vapor pressure is 0.99.

From the perspective of ensuring adequate permeability of a separation target material, a BET specific surface area ($S_{BET}$) of the core-shell porous silica particles is typically 100 m$^2$/g or greater, preferably 150 m$^2$/g or greater, more preferably 200 m$^2$/g or greater, even more preferably 250 m$^2$/g or greater, particularly preferably 300 m$^2$/g or greater, and most preferably 400 m$^2$/g or greater. On the other hand, from the perspective of operability as column fillers for liquid chromatography, such as the elution time of the separation target material, the BET specific surface area ($S_{BET}$) of the core-shell porous silica particles is typically 3000 m$^2$/g or less, preferably 2000 m$^2$/g or less, more preferably 1500 m$^2$/g or less, even more preferably 1000 m$^2$/g or less, and particularly preferably 500 m$^2$/g or less. The BET specific surface area ($S_{BET}$) can be determined by subjecting a nitrogen adsorption/desorption isotherm to BET analysis.

In a case where the core-shell porous silica particles are used as column fillers for liquid column chromatography, it is conceived that a smaller particle size of the column filler further improves separation performance, especially separation performance under high flow rate. Thus, when the use of the core-shell porous silica particles as column fillers is taken into consideration, the particle size of the core-shell porous silica particles is preferably smaller than particle size of known core-shell particles for column fillers (2.6 to 5.0 $\mu$m).

Furthermore, to improve separation performance of column fillers, it is necessary to shorten a diffusion distance of the separation target material in and out the pore and to ensure adequate retention time. For this purpose, it is important to increase the thickness of the shell to retain the separation target material for a longer period of time.

Furthermore, because improvement of the separation performance of the column fillers also depends on porosity of the shell, the peak pore size ($D_p$), the BET specific surface area, and the like which are related to porosity are preferably in particular ranges.

As described above, a preferred aspect of the core-shell porous silica particles is core-shell porous silica particles including core particles and shells, the shells each covering at least a part of each of the core particles, in which the core particles are non-porous silica particles having a volume average particle size ($D_v$) of 1.0 $\mu$m or greater and 2.4 $\mu$m or less, the shells are porous silica layers having a peak pore size ($D_p$) of 1.0 nm or greater and 6.0 nm or less and each having a thickness of 50 nm or greater and 500 nm or less, and the core-shell porous silica particles have a volume average particle size ($D_v$) of 1.1 $\mu$m or greater and 2.5 $\mu$m or less. Furthermore, in a more preferred aspect, a BET specific surface area of the core-shell porous silica particle is 150 m$^2$/g or greater and 1000 m$^2$/g or less. More preferred ranges of the volume average particle size ($D_v$) of the core particles, the peak pore size ($D_p$) of the shell, the shell thickness, the volume average particle size ($D_v$) and the BET specific surface area of the core-shell porous silica particles, and the like are as described above.

Examples

Hereinafter, the present disclosure will be described more specifically with reference to examples, but the present disclosure is not limited to the following examples as long as there is not deviation from the gist of the present invention.

Example 1

(Raw Materials for Core-Shell Porous Silica Particles)

- Core particle: non-porous silica particle (spherical silica, available from Sakai Chemical Industry Co., Ltd.) ($D_v$ = 1163 nm, $\rho$ = 1.9 g/cm$^3$, $S_m$ = 2.72 m$^2$/g)
- Cationic surfactant: hexadecyltrimethylammonium halide (cetyltrimethylammonium bromide; CTAB) (purity: 98.0%, available from FUJIFILM Wako Pure Chemical Corporation)
- Basic catalyst: ammonia (25 wt.% ammonia solution, available from FUJIFILM Wako Pure Chemical Corporation)
- Alcohol: ethanol (purity: 99.5 vol.%, available from FUJIFILM Wako Pure Chemical Corporation)
- Silica source: tetraethoxysilane (tetraethylorthosilicate; TEOS) (purity: 95.0%, available from FUJIFILM Wako Pure Chemical Corporation)
- Deionized water: deionized water produced by ion removal and microparticle filtration using an ultrapure water producing device (Merck & Co., Inc.)

Production of Core-Shell Porous Silica Particle

An ethanol-water mixed solvent, non-porous silica particles, and CTAB were mixed, and the non-porous silica particles were dispersed by an ultrasonic treatment. An ammonia solution was added to the obtained liquid mixture and the mixture was stirred for 30 minutes, and thus an aqueous suspension was prepared. A reaction was performed by continuously adding TEOS into this aqueous suspension at a flow rate of 0.020 $cm^3$/min at 35°C, and the reaction was terminated 18 hours after the start of the addition of the TEOS.

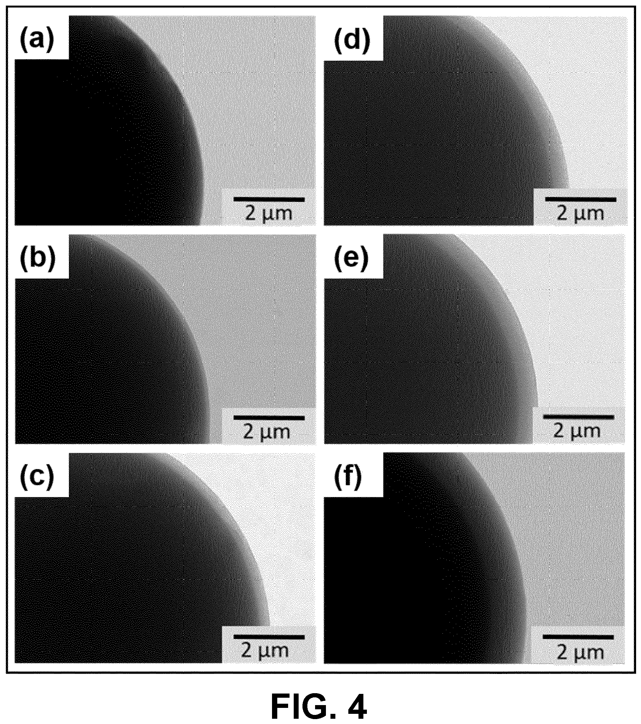

At this time, the change over time of the formed particles (i.e., core particles covered with the shell precursors) was observed by a scanning transmission electron microscope (STEM). Specifically, morphologies of the formed particles were observed at 1.0 hour, 1.5 hours, 2.0 hours, 2.5 hours, 3.0 hours, and 18.0 hours after the reaction start, i.e., start of the addition of the TEOS, by using the STEM. The results are shown in (a), (b), (c), (d), (e), and (f) of FIG. 4.

After completion of the reaction, the formed particles were subj ected to centrifugal washing for 3 times with ultrapure water and vacuum-dried overnight at 60°C. Next, the particles were fired for 4 hours at 550°C in the atmosphere to remove the cationic surfactant, which served as a template for the pores, and core-shell porous silica particles were obtained. Various evaluations were performed for the obtained core-shell porous silica particles. Furthermore, the amount of silica secondary particles formed as byproducts in the production of the core-shell porous silica particles was measured. The results are listed in Table 2.

Examples 2 to 6

Core-shell porous silica particles were obtained in the same manner as in Example 1 except for changing the used amount, reaction volume, and the like of the raw materials to those listed in Table 1.

Various evaluations were performed for the core-shell porous silica particles obtained in Examples 4 to 6. Furthermore, the amount of silica secondary particles formed as byproducts in the production of the core-shell porous silica particles was measured. The results are listed in Table 2.

Comparative Examples 1 to 3

Core-shell porous silica particles were obtained in the same manner as in Example 1 except for changing the used amount, reaction volume, and the like of the raw materials to those listed in Table 1, and adding the TEOS batch-wise into the aqueous suspension.

Table 1

| | $NH_3$[*1] [mM] | CTAB[*1] [mM] | EtOH/$H_2O$ (v/v) | Core particles | | | TEOS [$cm^3$][*3] | Reaction total volume [$cm^3$] |
| --- | --- | --- | --- | --- | --- | --- | --- | --- |
| | | | | Volume fraction[*2] [vol%] | Specific surface area [$m^2$/g] | Used amount [g] | | |
| Example 1 | 10 | 20 | 1/2 | 1.03 | 2.72 | 4.0 | 2.66 (12) | 200 |
| Example 2 | 10 | 20 | 1/2 | 1.03 | 2.72 | 4.0 | 5.32 (24) | 200 |
| Example 3 | 10 | 20 | 1/2 | 1.03 | 2.72 | 4.0 | 10.6 (48) | 200 |
| Example 4 | 100 | 20 | 1/2 | 1.03 | 2.72 | 4.0 | 2.66 (12) | 200 |
| Example 5 | 100 | 20 | 1/2 | 1.03 | 2.72 | 4.0 | 5.32 (24) | 200 |
| Example 6 | 100 | 20 | 1/2 | 1.03 | 2.72 | 4.0 | 10.6 (48) | 200 |
| Comparative Example 1 | 100 | 20 | 1/2 | 1.03 | 2.72 | 1.0 | 0.67 (3) | 50 |

(continued)

| | NH$_3$[*1] [mM] | CTAB[*1] [mM] | EtOH/H$_2$O (v/v) | Core particles | | | TEOS [cm$^3$][*3] | Reaction total volume [cm$^3$] |
|---|---|---|---|---|---|---|---|---|
| | | | | Volume fraction[*2] [vol%] | Specific surface area [m$^2$/g] | Used amount [g] | | |
| Comparative Example 2 | 100 | 20 | 1/2 | 1.03 | 2.72 | 1.0 | 1.33 (6) | 50 |
| Comparative Example 3 | 100 | 20 | 1/2 | 1.03 | 2.72 | 1.0 | 2.66 (12) | 50 |

*1: Concentration based on the reaction total volume
*2: Volume fraction based on the reaction total volume
*3: The number in parentheses represents the number of moles (mmol)

Evaluation

• Measurement of pH Change over Time of Reaction System in Shell Precursor Formation

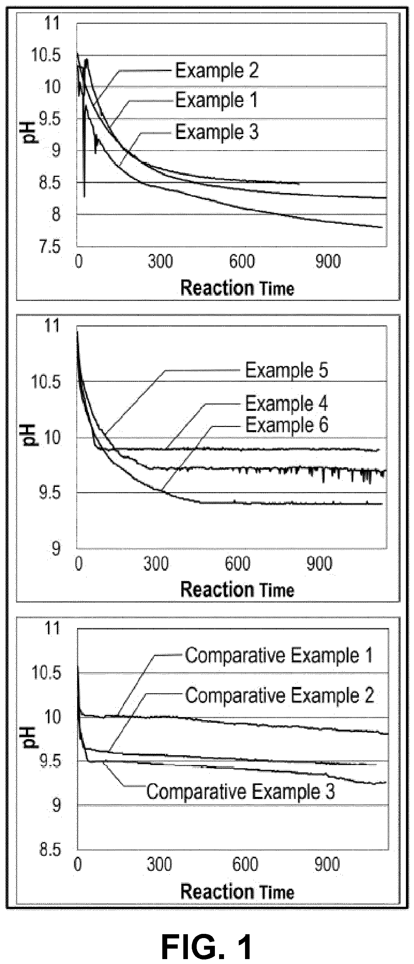

In the shell precursor formation of Examples 1 to 6 and Comparative Examples 1 to 3, the pH change over time at 35°C of the reaction system was measured by using a pH meter (LAQUA D-74, available from Horiba, Ltd.). Note that the time at which the continuous addition of the TEOS to the aqueous suspension was started or the time at which the batch addition of the TEOS into the aqueous suspension was performed was defined as 0 minutes. The results are shown in FIG. 1.

• Observation of Particle Morphology

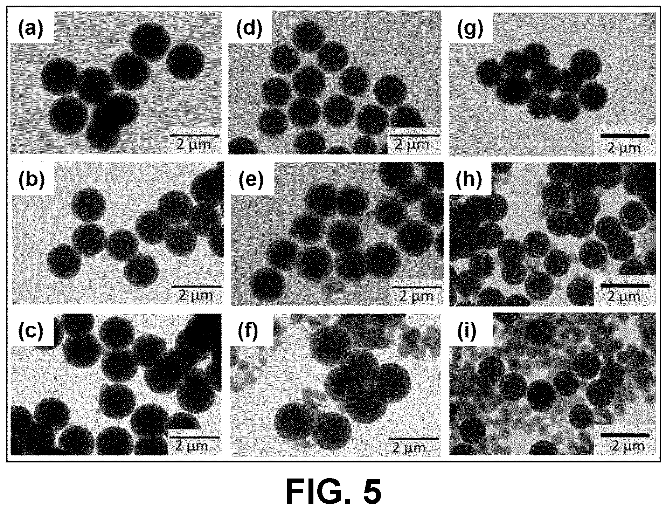

The observation of the morphology of the core particle covered with the shell precursor in Example 1 and the observation of the morphologies of the core-shell porous silica particles obtained in Examples 1 to 6 and Comparative Examples 1 to 3 were performed by a scanning transmission electron microscope (FE-STEM, HD-2700, available from Hitachi, Ltd.). As the sample for TEM observations, a sample was made by dripping a suspension of the target material onto a collodion film-attached mesh (200 mesh, available from JEOL, Ltd.) and drying the suspension naturally. The TEM images of the particles formed in the shell precursor formation of Example 1 are shown in FIG. 4, and the TEM images of the core-shell porous silica particles obtained in Examples 1 to 6 and Comparative Examples 1 to 3 are shown in (a) to (i) of FIG. 5.

• Calculation of Volume Average Particle Size (D$_v$) and Shell Thickness (T$_s$)

The particle size was directly measured from the TEM image of each of the core-shell porous silica particles obtained in Examples 1 to 6 and Comparative Example 1 using vernier calipers (available from Mitutoyo Corporation). For each sample, the particle sizes of approximately 100 particles were measured, and the volume average particle size d$_v$ (synonymous with the D$_v$ above) of the core-shell porous silica particles was calculated from the following Equation (2). The results are listed in Table 2. In addition, the shell thickness (T$_s$) was calculated from the difference in the D$_v$s between the core-shell porous silica particles and the core particles. Note that, in the equations, d$_i$ denotes the particle size and n$_i$ denotes the number of particles.

$$d_v = \left( \sum_i n_i d_i^3 \Big/ \sum_i n_i \right)^{1/3} \quad (2)$$

• Measurement of Nitrogen Adsorption/Desorption Isotherm, BET Specific Surface Area, Pore Volume (V$_p$), Peak Pore Size (D$_p$), Pore Size Distribution

The nitrogen adsorption/desorption isotherms of the core-shell porous silica particles obtained in Examples 1 to 6 were measured using an automatic specific surface area/pore distribution measurement device (BELSORP-mini II, available from MicrotracBEL Corp.), and the BET specific surface area and the peak pore size ($D_p$) were calculated. APyrex standard sample tube was used as a sample tube, and a BELPREP-vac II was used for pre-treatment. Particles fired at 550°C were used as the measurement sample, and subj ected to a pre-treatment at 300°C for 3 hours under vacuum, after which measurements were started. The BET specific surface area was calculated using BEL Master as the analysis software. The pore volume ($V_p$) was determined by converting an amount of nitrogen adsorption when a ratio of the vapor pressure to the saturated vapor pressure was 0.99. The results are listed in Table 2.

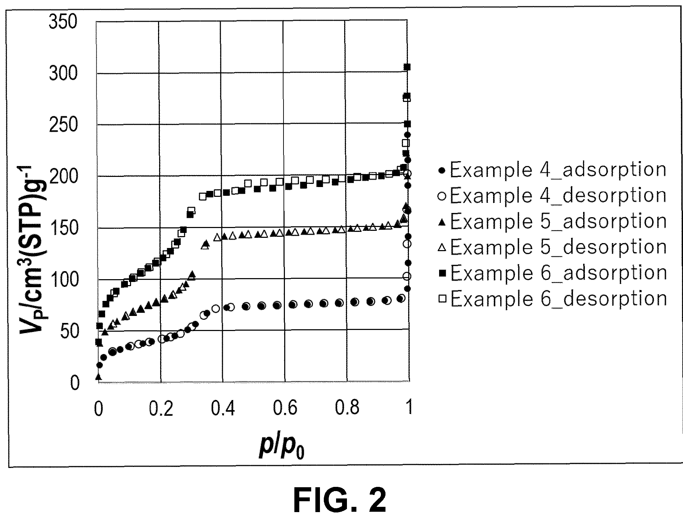

Furthermore, the nitrogen adsorption/desorption isotherms of the core-shell porous silica particles obtained in Examples 4 to 6 and the pore size distributions determined by the BJH method using the analysis software, BEL Master, are shown in FIG. 2.

• Measurement of Amount of Silica Secondary Particle Formation

In the centrifugal washing after the shell precursor formation of each of Examples 1 to 6, the supernatant solution was separated and further subj ected to centrifugation, and thus silica secondary particles were separated. The obtained silica secondary particles were analyzed by an inductively coupled plasma mass spectrometer (ICP-MS; Agilent 880, available from Agilent Technologies), and thus the amount of silica secondary particles formation of each of Examples 1 to 6 was determined. The results are listed in Table 2.

Table 2

| | Core-shell porous silica particles | | | | | | Silica secondary particles |
|---|---|---|---|---|---|---|---|
| | Volume average particle size ($D_v$) [nm] | Shell thickness ($T_s$) [nm] | BET specific surface area [m²/g] | Pore volume ($V_p$) [cm³/g] | Peak pore size ($D_p$) [nm] | TEM image | Amount of formation [mg/L] |
| Example 1 | 1350 | 93.3 | 178.7 | 0.1328 | 2.5 | FIG. 5 (a) | 89.73 |
| Example 2 | 1405 | 121 | 224.9 | 0.1455 | 2.3 | FIG. 5 (b) | 133.36 |
| Example 3 | 1548 | 192 | 266.4 | 0.1483 | 2.1 | FIG. 5 (c) | 423.63 |
| Example 4 | 1394 | 115 | 153.3 | 0.1360 | 2.8 | FIG. 5 (d) | 100.39 |
| Example 5 | 1485 | 161 | 295.6 | 0.2529 | 2.8 | FIG. 5 (e) | 282.58 |
| Example 6 | 1656 | 247 | 431.5 | 0.3316 | 2.5 | FIG. 5 (f) | 130.37 |
| Comparative Example 1 | 1365 | 101 | n.d.[*2] | n.d.[*2] | n.d.[*2] | FIG. 5 (g) | n.d.[*2] |
| Comparative Example 2 | _[*1] | _[*1] | _[*1] | _[*1] | _[*1] | FIG. 5 (h) | n.d.[*2] |
| Comparative Example 3 | _[*1] | _[*1] | _[*1] | _[*1] | _[*1] | FIG. 5 (i) | n.d.[*2] |

*1: Core-shell porous silica particles were not obtained.
*2: "n.d." means no data.

Discussion

As shown in FIG. 1, in each of Examples 1 to 6 in which the continuous addition of the silica source-containing liquid was performed, the pH of the reaction system gradually decreased. On the other hand, in each of Comparative Examples 1 to 3 in which the batch addition of the silica source-containing liquid was performed, the pH of the reaction system rapidly decreased. From these results, it can be said that the silica source was gradually hydrolyzed in the case where the continuous addition of the silica source-containing liquid was performed, and the silica source was rapidly hydrolyzed in the case where the batch addition of the silica source-containing liquid was performed. That is, it was shown that, in the shell precursor formation, the hydrolysis of the silica source proceeded gradually and continuously by the continuous addition of the silica source-containing liquid into the aqueous suspension containing the core particles.

As is clear from FIG. 1, a gradient of the decrease in pH in Example 1 was large until the reaction time reached approximately 200 minutes, and then decreased. In addition, as is clear from FIG. 4, the thickness of the shell precursor in the early stage, which was from the reaction start to 3 hours, within 18 hours of the reaction time, reached more than half the thickness at 18 hours of the reaction time. From the above, it is conceived that a large amount of the silica produced in the early stage of the reaction was consumed for the shell formation.

Furthermore, from FIG. 1, it was confirmed that the core-shell porous silica particles were produced in the pH range of approximately from 7.5 to 11.0 under the condition of the ammonia concentration of 10 mM, and in the pH range of approximately from 9.4 to 11.0 under the condition of the ammonia concentration of 100 mM.

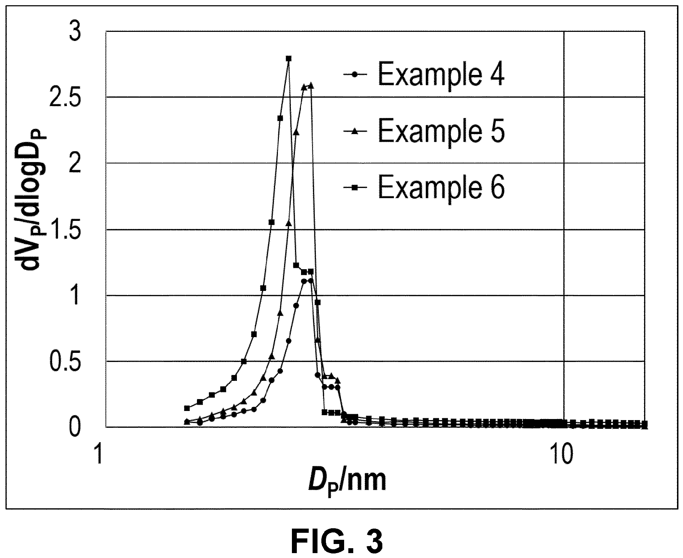

From FIG. 2 and FIG. 3, the nitrogen adsorption isotherm of the core-shell porous silica particles obtained in each of Examples 4 to 6 exhibited type IV isotherm with no hysteresis, and it was confirmed that cylindrical mesopores were formed in the shell.

As can be seen from FIG. 2, the value of $p/p_0$ at a point of onset of the nitrogen adsorption isotherm curve increase was larger in the order of Examples 4, 5, and then 6. That is, it was found that the peak pore size ($D_p$) became smaller as the used amount of the silica source increased.

From FIG. 3, it was found that, as the used amount of the silica source increased, the small pores increased and the peak became broader.

As shown in Table 2, the thickness of the shell increased when the ammonia concentration was increased (Examples 1 to 6). It is conceived that this is because increase of the ammonia concentration increased ionic strength of the reaction system, weakened electrostatic repulsion between the core particles and the silica nuclei, and promoted aggregation growth of the silica nuclei and diffusion of the silica nuclei or the aggregates thereof to the surface of the core particles.

As is clear from Table 2, increase of the ammonia concentration tended to increase the amount of silica secondary particle formation. The reason for this is surmised as follows. The hydrolysis rate of the silica source, which is a rate-determiner of the reaction, is proportional to the ammonia concentration, and thus increase of the ammonia concentration resulted in the hydrolysis of a large amount of the silica source in the early stage of the reaction. As a result, it is conceived that, in the early stage of the reaction, the amount of the silica nuclei exceeded the range that allows the silica nuclei to be aggregated and deposited on core particle surfaces, and silica nuclei aggregated each other, and thus secondary particles were formed as byproducts.

Furthermore, from Table 2, it was confirmed that increasing the used amount of the silica source increased the thickness of the shell, and increasing the thickness of the shell increased the BET specific surface area and the peak pore size ($D_p$) of the core-shell porous silica particles (Examples 1 to 6).

As shown in Table 2 and FIG. 5, among the production methods in which the silica source-containing liquid was added batch-wise (Comparative Examples 1 to 3), the core-shell porous silica particles were obtained in the case where the used amount of the silica source was 12 mmol per 200 cm$^3$ of the reaction total volume (Comparative Example 1). However, in the cases where the used amount of the silica source was increased to 24 mmol or 48 mmol per 200 cm$^3$ of the reaction total volume, shells were not formed on most of surfaces of core particles, silica secondary particles were formed, and thus core-shell porous silica particles were not obtained (Comparative Examples 2 and 3).

On the other hand, it was confirmed that, when the method in which the silica source-containing liquid was continuously added to the aqueous suspension containing the core particles was employed in the shell precursor formation, the shell precursor was efficiently formed even when the used amount of the silica source was increased, and the thickness of the shell was increased (Examples 1 to 6). From these results, it can be said that the production method according to the present disclosure is useful to increase the thickness of the shell.

## Claims

1. A method for producing core-shell porous silica particles, the method comprising:

   a step of forming a shell precursor, the step comprising continuous addition of a liquid containing a silica source into an aqueous suspension containing non-porous silica particles, a cationic surfactant, a basic catalyst, and an alcohol to form a shell precursor on a surface of non-porous silica particles, the continuous addition satisfying conditions (A) and (B),

(A) a pH cf a reaction system at a reaction temperature is 7 or higher and 13 or lower, the reaction system being a system in which the liquid containing the silica source has been added to the aqueous suspension, and

(B) a pH value change of the reaction system a the reaction temperature is 1.5/10 min or less; and

a step of forming a porous shell, the step comprising removal of the cationic surfactant from the shell precursor that has been formed in the step of forming the shell precursor, to form a porous shell;

wherein, when a specific surface area of the non-porous silica particles is $X$ m$^2$/g a used amount of the non-porous silica particles is $Y$ g, and a used amount of the silica source is $Z$ cm$^3$ in the step of forming the shell precursor, $Z/(XY)$ is 0.01 or greater and 10.0 or less.

2. The method for producing core-shell porous silica particles according to claim 1, wherein a volume average particle size of the non-porous silica particles is 1.0 $\mu$m or greater and 2.4 $\mu$m or less.

3. The method for producing core-shell porous silica particles according to claim 1 or 2, wherein the cationic surfactant is an alkylammonium halide.

4. The method for producing core-shell porous silica particles according to any one of claims 1 to 3, wherein the basic catalyst is ammonia.

5. The method for producing core-shell porous silica particles according to any one of claims 1 to 4, wherein the alcohol is an alkyl alcohol.

6. The method for producing core-shell porous silica particles according to any one of claims 1 to 5, wherein the silica source is an alkoxysilane.

7. Core-shell porous silica particles comprising:

core particles and shells each covering at least a part of each of the core particles, wherein the core particles are non-porous silica particles having a volume average particle size of 1.0 $\mu$m or greater and 2.4 $\mu$m or less,

the shells are porous silica layers having a peak pore size of 1.0 nm or greater and 6.0 nm or less and having a thickness of 50 nm or greater and 500 nm or less, and

the core-shell porous silica particles have a volume average particle size of 1.1 $\mu$m or greater and 2.5 $\mu$m or less.

8. The core-shell porous silica particles according to claim 7, wherein a BET specific surface area of the core-shell porous silica particles is 150 m$^2$/g or greater and 1000 m$^2$/g or less.

**FIG. 1**

FIG. 2

**FIG. 3**

**FIG. 4**

FIG. 5

## INTERNATIONAL SEARCH REPORT

| International application No. |
| --- |
| **PCT/JP2022/005268** |

### A. CLASSIFICATION OF SUBJECT MATTER

***C01B 33/18***(2006.01)i; ***B01J 20/10***(2006.01)i; ***B01J 20/32***(2006.01)i
FI: C01B33/18 C; B01J20/32 Z; B01J20/10 A

According to International Patent Classification (IPC) or to both national classification and IPC

### B. FIELDS SEARCHED

Minimum documentation searched (classification system followed by classification symbols)

C01B33/18; B01J20/10; B01J20/32

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | WO 2017/141821 A1 (UNIV TOHOKU) 24 August 2017 (2017-08-24) | 7-8 |
| | claims 1-3, 5-6, paragraphs [0015]-[0016], [0023], [0045], [0067], example 2, table 3 | |
| Y | | 1-6 |
| X | WO 2007/122930 A1 (ASAHI GLASS COMPANY, LIMITED) 01 November 2007 (2007-11-01) | 7-8 |
| | claims 1, 3-5, example 1 | |
| Y | | 1-6 |
| Y | JP 2009-249249 A (KAO CORP) 29 October 2009 (2009-10-29) | 1-6 |
| | claims, paragraphs [0011], [0022]-[0022] | |
| Y | WO 2019/240294 A1 (UNIV TOHOKU) 19 December 2019 (2019-12-19) | 1-6 |
| | claims 1, 8, paragraph [0023] | |

☐ Further documents are listed in the continuation of Box C.        ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **29 March 2022** | **12 April 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

24

**INTERNATIONAL SEARCH REPORT**
Information on patent family members

International application No.

**PCT/JP2022/005268**

| Patent document cited in search report | | | Publication date (day/month/year) | Patent family member(s) | | | Publication date (day/month/year) |
|---|---|---|---|---|---|---|---|
| WO | 2017/141821 | A1 | 24 August 2017 | US | 2020/0071171 | A1 | |
| | | | | claims 1-3, 5-6, paragraphs [0034]-[0039], [0051]-[0052], [0091]-[0093], [0139]-[0141], example 2, table 3 | | | |
| | | | | EP | 3418256 | A1 | |
| | | | | CN | 108698838 | A | |
| WO | 2007/122930 | A1 | 01 November 2007 | US | 2009/0053524 | A1 | |
| | | | | claims 1, 3-5, example 1 | | | |
| | | | | EP | 2008971 | A1 | |
| | | | | CN | 101426725 | A | |
| | | | | KR | 10-2008-0111032 | A | |
| JP | 2009-249249 | A | 29 October 2009 | (Family: none) | | | |
| WO | 2019/240294 | A1 | 19 December 2019 | EP | 3808703 | A1 | |
| | | | | claims 1, 8, paragraph [0030] | | | |
| | | | | CN | 112262105 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3505785 A
- US 20070189944 A
- WO 2019240294 A
- WO 2017141821 A